**Europäisches Patentamt**

**European Patent Office**

**Office européen des brevets**

(19)

(11) Veröffentlichungsnummer: **0 179 016**
**B1**

(12) **EUROPÄISCHE PATENTSCHRIFT**

(45) Veröffentlichungstag der Patentschrift:
**27.12.89**

(21) Anmeldenummer: **85730130.3**

(22) Anmeldetag: **20.09.85**

(51) Int. Cl.⁴: **G 01 J 4/04,** G 01 N 21/21

(54) Zweistrahl-Echtzeitpolarimeter.

(30) Priorität: 25.09.84 DE 3435189
07.12.84 DE 3445318

(43) Veröffentlichungstag der Anmeldung:
**23.04.86 Patentblatt 86/17**

(45) Bekanntmachung des Hinweises auf die Patenterteilung:
**27.12.89 Patentblatt 89/52**

(84) Benannte Vertragsstaaten:
**AT FR GB IT NL**

(56) Entgegenhaltungen:
**EP-A-0 087 535**
**WO-A-84/03357**
**US-A-3 390 605**

(73) Patentinhaber: **Distl, Richard, Edlingerstrasse 7,**
**D-8000 München 90 (DE)**
Patentinhaber: **Schmidt, Ulrich, Heerstrasse 8,**
**D-1000 Berlin 19 (DE)**

(72) Erfinder: **Distl, Richard, Edlingerstrasse 7, D-8000**
**München 90 (DE)**
Erfinder: **Schmidt, Ulrich, Heerstrasse 8, D-1000**
**Berlin 19 (DE)**

(74) Vertreter: **Meissner, Peter E., Dipl.- Ing., Meissner**
**& Meissner Patentanwälte Herbertstrasse 22,**
**D-1000 Berlin 33 Grunewald (DE)**

EP 0 179 016 B1

**Beschreibung**

Die Erfindung bezieht sich auf eine Vorrichtung zur Messung der durch optisch aktive Substanzen hervorgerufenen Drehung der Schwingungsebene von linear polarisierter Strahlung.

Bei einer erfindungsgemäßen Meßanordnung wird der jeweils gemessene Drehwert der Probe immer auf die, in einem Referenzstrahlengang bestimmte optische Aktivität eines Referenzelements normiert. Dadurch wird das Meßergebnis frei von Einflüssen der Meßwellenlänge und/oder der Meßtemperatur. Die Bestimmung der Schwingungsebene erfolgt dabei in Echtzeit.

Eine Meßvorrichtung gemäß den kennzeichnenden Merkmalen der Ansprüche kann beispielsweise überall dort eingesetzt werden, wo die zirkulare Doppelbrechung oder deren dynamische Veränderung sehr genau und schnell gemessen werden soll. So z. B. innerhalb der Polarimetrie zur Bestimmung der Konzentration, Schichtlänge oder spezifischer Drehung optisch aktiver Substanzen.

In der PCT-Anmeldung PCT/EP84/00 050 (SCHMITD, DISTL) (Veröffentlichungsnummer WO-A-84-03 357) ist eine Mehrstrahl-Meßanordnung zur polarimetrischen Untersuchung von Proben im Echtzeitverfahren beschrieben.

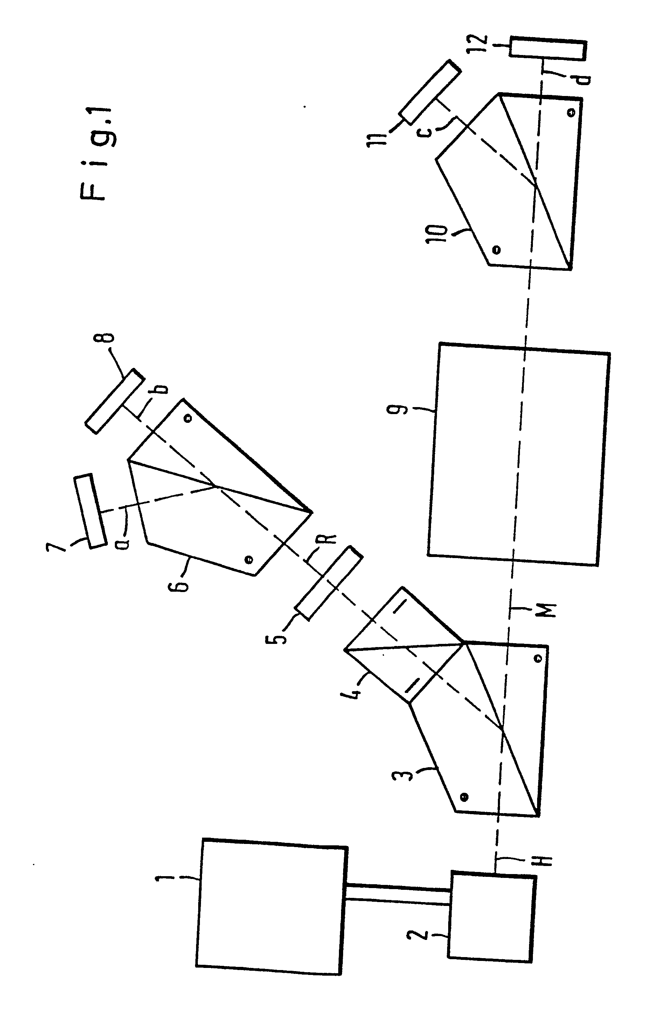

Die erfindungsgemäße Lehre der o.g. PCT/EP84/00 050 beruht u.a. darauf, daß sich durch eine Verhältnisbestimmung der Relativintensität des zu analysierenden Lichtstrahls nach einem Analysator, zu dessen Absolutintensität vor dem Analysator, die Schwingungsrichtung des Lichtstrahls berechnen läßt. Hierbei wird der Lichtstrahl nach Durchlaufen der Probe mittels eines Strahlteilers, vorzugsweise eines Beugungsgitters, in einem Referenzstrahl und wenigstens einem Prüfstrahl, in dessen Strahlengang ein Analysator mit feststehender Durchlaßrichtung angeordnet ist, aufgeteilt. Die Intensitäten der Teilstrahlen werden mittels ihnen zugeordneten photoempfindlichen Fühlern erfaßt. Die Signalausgänge der photoempfindlichen Fühler sind zur Ermittlung von der Probe zuordenbaren polarimetrischen Größen mit den Eingängen einer Meßschaltung verbunden (Fig. 1).

Die Meßschaltung ist im wesentlichen wie folgt aufgebaut (Fig. 4): Mittels je einen jedem photoempfindlichen Fühler nachgeschalteten Kurzzeitspeicher werden die Ausgangssignale der photoempfindlichen Fühler synchron und kurzzeitig festgehalten. Eine den Kurzzeitspeichern zugeordnete Steuerschaltung übernimmt hierbei die Steuerung der Kurzzeitspeicher. Die Verhältnisbildung der Relativintensität zur Absolutintensität erfolgt mittels einer verzögerungsfrei arbeitenden Divisionsschaltung, welche eingangsseitig mit den Ausgängen der Kurzzeitspeicher verbunden ist. Zur Berechnung und Ausgabe von der Probe zuordenbaren polarimetrischen Größen, insbesondere der optischen Aktivität, ist eine digitale Datenverarbeitungseinrichtung vorgesehen, welche eingangsseitig mit dem Ausgang der Divisionsschaltung verbunden ist. Ferner weist die Meßschaltung wenigstens einen A/D-Wandler auf, der die analogen Signale zur Weiterverarbeitung in digitale Form umwandelt.

Bei der o.g. Mehrstrahl-Meßanordnung nimmt hinsichtlich der Meßgenauigkeit die Wirkungsweise des Strahlteilers eine entscheidende Bedeutung ein.

Dielektrische Strahlteiler sind z. B. nicht geeignet, da deren Teilungsverhältnis eine Funktion der Schwingungsrichtung des auftreffenden Lichtstrahls ist. Demzufolge geht in das Meßergebnis auch die verfälschende Wirkungsweise dieses Strahlteilers ein.

In der o.g. PCT/EP84/00 050 wird hierzu vorgeschlagen, als strahlteilendes Element ein Beugungsgitter zu verwenden. Hierbei ist vor allem wichtig, daß der, auf das Beugungsgitter auftreffende, Lichtstrahl immer in gleicher Weise auf dessen Gitterstruktur auftrifft, da die Beugungseffizienz eine Funktion des Einfallswinkels ist. Demgemäß muß eine ausreichende Punktförmigkeit der Strahlungsquelle angestrebt werden, was nur durch eine aufwendige Führung des Strahlenganges erreicht werden kann. Ein weiterer Nachteil besteht darin, daß mit dieser Maßnahme entsprechende Lichtverluste verbunden sind. Da die Schwingungsrichtung des Referenzstrahls nicht definiert ist, verfälscht ferner die Vektorempfindlichkeit des, dem Referenzstrahl zugeordneten, photoempfindlichen Fühlers das Meßergebnis.

Aus der europäischen Patentanmeldung 80 106 584.8 (MÜLLER) (Veröffentlichungsnummer EP-A-30 610) ist bekannt, innerhalb eines Polarimeters den Strahlteiler und Analysator in Form einer planparallelen Platte bzw. eines Glasprismas zusammenzufassen.

Diese Elemente können zwar, unter gewissen Einschränkungen, wie dort bezweckt, als Demodulatoren dienen, sind jedoch, wie nachfolgend ausgeführt, als Strahlteiler innerhalb einer Meßanordnung zur quantitativen Bestimmung des Polarisationszustandes von elektromagnetischer Strahlung nicht geeignet.

Der transmittierte Strahlungsanteil ist bei derartigen Elementen nur zu einem Teil polarisiert, d.h. die gewünschte Funktion des Analysators ist erheblich beeinträchtigt. Diese Tatsache ist insofern von Bedeutung, als damit unmittelbar die Meßgenauigkeit einer Meßanordnung mit den beschriebenen Elementen eingeschränkt wird. Ferner ist der Polarisationsgrad der reflektierten Strahlung erheblich vom Einfallswinkel des auftreffenden Lichtstrahls abhängig. Dies gilt insbesondere im Bereich des Brewster-Winkels. Hierbei ist anzumerken, daß, z. B. bei der Untersuchung von Proben, der Meßstrahl wohl kaum in einem konstanten Winkel auf das Teilerelement auftrifft, da schon die molekulare Struktur bzw. Inhomogenität der Probe zu einer unvermeidbaren teilweisen Ablenkung des Meßstrahls führt. Der Polarisationsgrad der reflektierten Strahlung wird daher in unbestimmbarer Weise verändert.

Demgemäß ist somit der, mit einer Meßanordnung mit den vorstehend beschriebenen Elementen zum Zwecke eines Strahlteilers und gleichzeitigen Analysators, ermittelte Meßwert mit mindestens zwei systematischen Meßfehlern behaftet.

In der deutschen Offenlegungsschrift DE-A-2 261 875 (SIEMENS AG) wird eine polarimetrische Meßanordnung beschrieben, in welcher als Strahlteiler und Analysator ein polarisierendes Doppelprisma verwendet wird.

Von großem Nachteil ist hierbei die Tatsache, daß bei einem Doppelprisma, beispielsweise einem Wollastoneprisma, der Divergenzwinkel der austretenden Teilstrahlen von der Wellenlänge der auftreffenden Strahlung abhängig ist. Da die, zur Erfassung der Intensitäten der Teilstrahlen vorgesehenen photoempfindlichen Fühler in der Regel an einem feststehenden Ort angebracht sind, ist demgemäß eine Anwendung bei veränderlicher bzw. unbestimmter Wellenlänge der zu analysierenden Strahlung nicht möglich. Bei einem Doppelprisma treten ferner die beiden Strahlungskomponenten nicht senkrecht zu den Austrittsflächen aus dem Kristall heraus, wodurch unterschiedliche Reflexions- bzw. Absorptionsverluste entstehen, welche das Meßergebnis verfälschen.

In der EP-A-0 087 535 (American Crystal Sugar Company) ist ein Verfahren zur Messung der optischen Aktivität einer Probe beschrieben. Dabei wird die von einer IR-Lichtquelle ausgehende Strahlung linear polarisiert, durchläuft die Probenkammer und trifft daran anschließend auf einen strahlteilenden Analysator. Dieser zerlegt die Strahlung in ihre senkrecht zueinander polarisierten Komponenten, die daraufhin mittels jeweils eines Photoempfängers erfaßt werden. Die Signale werden über Verstärker mit justierbaren Offset und Verstärkung einem Dividierer zugeführt. Das Divisionssignal wird an eine Auswerteinheit geleitet, die das Meßergebnis über empirische Tabellen ermittelt.

Die Temperatur an der Probe wird mittels eines Fühlers erfaßt. Liegen keinen Daten über die Temperaturabhängigkeit der optischen Aktivität vor, ist dabei eine Temperaturkompensation nicht möglich. Die dem Meßergebnis zugrundeliegenden Tabellen zum Ausgleich von Nichtlinearitäten sind Geräteindividuell verschieden, da z. B. der Polarisationsgrad der im strahlteilenden Analysator totalrereflektierten Komponente keine Materialkonstante ist.

Die Einstellung von Offset und Verstärkung an den Operationsverstärkern erfolg über veränderliche Widerstände. Bei der angestrebten Genauigkeit von 16 Bit Auflösung, kann das Ergebnis nicht langzeitstabil sein, da es keine Bauelemente gibt, deren Drift und thermisches Verhalten innerhalb der dafür erforderlichen Toleranzen liegt. Die Absorption der Probe wird dabei mittels einer Intensitätssteuerung der Lichtquelle kompensiert. Dies bedeutet, daß der Dynamikbereich des Meßsystems vom Dynamikbereich der Lichtquelle begrenzt wird.

Bei allen vorgenannten Verfahren zur Messung der optischen Aktivität einer Probe, wirkt sich eine Abweichung der Meßtemperatur und Meßwellenlänge von den Bezugsbedingungen unmittelbar auf das Meßergebnis aus. Eine Kenntnis der Ist-Zustände dieser Parameter, das ORD-Spektrum (ORD: optische Rotationsdispersion) sowie die Temperaturabhängigkeit, ist dann jedoch für die Ermittlung der von der optischen Aktivität ableitbaren Größen erforderlich.

Die erfindungsgemäße Lehre befaßt sich dahingehend, die von ihrer Gattung her aus der PCT/EP84/00 050 bekannte Meßanordnung hinsichtlich ihrer Meßgenauigkeit und Funktion weiterzuentwickeln, wobei insbesondere die eingangs im Zusammenhang mit der PCT/EP84/00 050 erläuterten Probleme in technisch wirksamer und einfacher Weise gelöst werden sollen.

Die gestellte Aufgabe wird anspruchsgemäß gelöst.

Die von der Lichtquelle ausgehende elektromagnetische Strahlung wird vor der Wechselwirkung mit der zu untersuchenden Substanz in einen Meßstrahlengang und einen Referenzstrahlengang aufgespalten. Der Referenzstrahl trifft hierbei nach Wechselwirkung mit einem Referenzelement auf einen ersten strahlteilenden Analysator, der Meßstrahl nach Wechselwirkung mit der zu untersuchenden Probe auf einen zweiten strahlteilenden Analysator. Die strahlteilenden Analysatoren bestehen aus einen doppelbrechenden Material, wobei die beiden Teilstrahlen an unterschiedlichen Stellen des Elements austreten. Jedem dieser Teilstrahlen ist je ein photoempfindlicher Fühler zugeordnet, wobei diese ausgangsseitig mit den Eingängen einer Meßschaltung verbunden sind. Die Meßschaltung weist jedem photoempfindlichen Fühler nachgeschaltete Kurzzeitspeicher, auf, welche die Ausgangssignale der photoempfindlichen Fühler synchron und kurzzeitig festhalten. Dadurch werden gleiche Meßbedingungen im Meßablauf gewährleistet. Ferner weist die Meßschaltung, zur Ermittlung der Absolutintensität, vor den strahlteilenden Analysatoren je eine ihnen zugeordnete Additionsschaltung auf, sowie je eine jedem Strahlengang zugeordnete Divisionsschaltung, welche eingangsseitig mit dem Ausgang der, den betreffenden Strahlengang zugeordneten, Additionsschaltung und dem Ausgang eines der beiden Kurzzeitspeicher, welchen die Additionsschaltung zugeordnet ist, verbunden ist. Diese liefert ein normiertes, insbesondere von der Ausgangsintensität der Lichtquelle und Absorption der zu untersuchenden Probe bzw. des Referenzelements unabhängiges Ausgangssignal. Die Ausgangssignale der beiden Divisionselemente werden mittels eines Analog-Schalters wahlweise an eine digitale Datenverarbeitungseinrichtung geleitet. Hierzu ist ferner wenigstens ein Analog/Digital-Wandler der digitalen Datenverarbeitungseinrichtung vorgeschaltet. Demzufoge ist eine Weiterverarbeitung der Meßsignale in Echtzeit möglich.

Die erfindungsgemäße Lehre beschreibt eine Meßanordnung, welche die Anwendung des Zweistrahlprinzips, wie es bereits aus anderen Bereichen der Meßtechnik bekannt ist, beispielsweise in der Spektroskopie und der Photometrie, innerhalb der Polarimetrie erlaubt. Auch hierbei geht es im wesentlichen darum, bestimmte, das Meßergebnis verfälschende, Einflußparameter, systemimmanent aus dem Meßergebnis zu eliminieren.

Die optische Aktivität bzw. davon ableitbare Größen, wie sie in der Polarimetrie bestimmt werden sollen, sind u.a. Funktionen der Temperatur der zu untersuchenden Substanz und der Wellenlänge der zur Durchstrahlung der Substanz verwendeten Strahlung. Diese beiden Parameter lassen sich nur mit hohem Aufwand innerhalb der von der Präzisionspolarimetrie geforderten Toleranzen (±0,01°C und ±0,1 nm Abweichung von der effektiven Wellenlänge) während des Meßzeitraumes auf einen Sollwert stabil halten. In manchen Applikationen ist es sogar unmöglich, derartige Toleranzen einzuhalten. So z. B. bei Verwendung von Sendedioden, deren Peak-Wellenlänge, aufgrund termischer Effekte und Abhängigkeit von der Ausgangsleistung, verhältnismäßig stark variiert.

Die o.g. Wellenlängen- und/oder Temperaturabhängigkeit wird innerhalb dem erfindungsgemäßen Zweistrahlmeßverfahren dadurch eliminiert, indem die optische Aktivität der zu analysierenden Substanz, d.h. die durch die Substanz herforgerufene Drehung der Schwingungsebene, in jedem Meßzyklus mittels eines Korrekturfaktors, welcher im Referenzzweig bestimmt wird, auf eine Bezugsweltenlänge bzw. Temperatur normiert wird. Refererenz- und Meßstrahlengang sind funktionell gesehen gleich aufgebaut. Hierbei werden der Referenz- und Meßstrahl mittels eines Strahlteilers aus der von der Lichtquelle ausgehenden elektromagnetischen Strahlung erzeugt. Ein Linearpolarisator steht dabei jeweils in fester Orientierung zu einem strahlteilenden Analysator. Mit anderen Worten, die Durchlaßrichtung des bzw. der Linearpolarisatoren steht bzw. stehen in einer festen Winkelbeziehung zur Schwingungsrichtung der ordentlichen und außerordentlichen Strahlungskomponente, welche mittles der strahlteilenden Analysatoren erzeugt werden. Die ordentlichen und außerordentlichen Strahlungskomponenten werden anschließend mit ihnen zugeordneten photoempfindlichen Fühler erfaßt.

Referenz- und Meßstrahlengang unterscheiden sich erfindungsgemäß nur insoweit, als im letzteren zwischen Linearpolarisator und strahlteilendem Analysator der Probenraum angeordnet ist, während sich im Referenzstrahlengang an dieser Stelle eine optisch aktive Substanz, im folgenden Referenzelement genannt, mit bekannter spezifischer optischer Aktivität befindet. Ist nun die Optische Rotationsdispersion (ORD) sowie Temperaturabhängigkeit der optischen Aktivität des Referenzelements und der zu analysierenden Substanz qualitativ gleich, bzw. im Rahmen der Meßgenauigkeit nicht voneinander unterscheidbar, so läßt sich die folgende Beziehung anwenden:

$$[\alpha]^{\theta M}_{\lambda M} = [\alpha]^{\theta B}_{\lambda B} \cdot c_{\Delta\lambda} \cdot c_{\Delta\theta}$$

wobei gilt:

$[\alpha]^{\theta M}_{\lambda M}$: = spezifische optische Aktivität bei momentaner Temperatur und Wellenlänge

$[\alpha]^{\theta B}_{\lambda B}$: = spezifische optische Aktivität bei Bezugstemperatur (meist 293°K) und Bezugswellenlänge

$c_{\Delta\lambda}$: = Korrekturfaktor bedingt durch die von der Bezugswellenlänge abweichende Wellenlänge

$c_{\Delta\theta}$: = Korrekturfaktor bedingt durch die von der Bezugstemperatur abweichende Temperatur.

Das Produkt von $c_{\Delta\lambda}$ und $c_{\Delta\theta}$ wird im Referenzstrahlengang ermittelt und mit diesem der jeweilige Meßwert korrigiert. Demgemäß ist das Meßergebnis frei von Einflüssen, die durch Temperatur- und Wellenlängenveränderungen bedingt sind. Diesen Vorteil haben auch die, hauptsächlich in der Zuckeranalyse eingesetzten Saccharometer. In diesen wird die, durch die Probe hervorgerufene Drehung der Schwingungsrichtung des Lichtes, mittels eines Quarzkeils kompensiert. Da Quarz und die meisten Zucker nahezu die gleich ORD und Temperaturabhängigkeit ihrer optischen Aktivität aufweisen (vgl. z. B. Icumsa Proceedings, 17th Session, Montreal 1978), ist die Kompensationsstellung des Quarzkeils ein direktes Maß für die optische Aktivität der Probe, unabhängig von Schwankungen der Wellenlänge und Temperatur. Diese Eigenschaft begründet die hohe Zuverlässigkeit der Saccharometer, auch unter ungünstigen Umgebungsbedingungen.

Gemäß der vorliegenden Erfindung können die o.g. Vorteile nun auch auf anderen Anwendungsgebieten erzielt werden. Dies geschieht durch die Möglichkeit, beliebige Referenzelemente zu verwenden, d.h. immer das ideale Bezugsnormal der Meßanordnung zugrundezulegen.

Die strahlteilenden Analysatoren bestehen aus einen doppelbrechenden Material, wobei die beiden Teilstrahlen an unterschiedlichen Stellen des Elements austreten. Hierzu wird vorzugsweise ein Foster-Strahlteiler herangezogen, da bei diesen der Divergenzwinkel zwischen den beiden austretenden Strahlungskomponenten unabhängig von der Wellenlänge der auftreffenden Strahlung ist. Der bei einem derartigen Doppelprisma gerade durchgehende Strahlungsanteil ist besser als 99,99995% polarisiert, der totalreflektierte Strahlungsanteil aufgrund Übersprecheffekten (Crosstalk) nur teilweise.

Wird eine Strahlungsquelle mit einer Wellenlänge im sichtbaren Spektrum verwendet, ist hierbei der Polarisationsgrad der durchgehenden Strahlungskomponente mindestens in einem Bereich von ±4 Winkelgrade unabhängig vom Einfallswinkel der auf das doppelbrechende Element auftreffenden Strahlung.

Bei der Bestimmung der Schwingungsebene des linear polarisierten Lichtes geht die erfindungsgemäße Lehre, wie auch die gattungsgleiche PCT/EP84/00 050, vom Gesetz von Malus (vgl. Ellipsometry and polarized Light, R.M.A. Asam, N.M. Bashara, 1977, Seite 110) aus. Hieraus ist bekannt, daß sich die Intensität nach einem idealen Analysator wie folgt bestimmen läßt:

$$A = A_0 \cdot \cos^2\alpha \cdot C$$

wobei gilt:

A:   = gemessene Intensität nach dem Analysator
$A_0$:   = auftreffende Intensität
$\alpha$:   = Winkel zwischen der auftreffenden linear polarisierten Strahlung und der Durchlaßrichtung des Analysators
C:   = Konstanter Faktor bedingt durch Reflexionsverluste bei Ein- und Austritt der Strahlung sowie Absorption des Analysatormaterials.

Durch Auflösen obiger Formel nach $\alpha$ läßt sich folgende Beziehung aufstellen:

$$\alpha = \arccos \sqrt{\frac{A}{A_0} \cdot \frac{1}{C}}$$

Die meisten strahlteilenden Kristallpolarisatoren sind im Rahmen der Meßgenauigkeit für beide Strahlungskomponenten ideale Polarisatoren. Man kann daher für beide Strahlungskomponenten das Gesetz von Malus anwenden. Wie bereits erläutert, ist bei einem Foster-Strahlteiler nur der gerade durchgehende Strahlungsanteil in ausreichendem Maße polarisiert. Demgemäß folge auch nur dessen Ausgangsintensität dem Gesetz von Malus und kann zur Bestimmung von A herangezogen werden.

Zur Weiterverarbeitung der Ausgangssignale der photoempfindlichen Fühler und Ausgabe von dem Polarisationszustand der elektromagnetischen Strahlung zuordenbaren physikalischen Größen, ist den photoempfindlichen Fühlern eine Meßschaltung nachgeschaltet.

Die erfindungsgemäße Lehre geht nun davon aus, daß sich der Wert C · $A_0$ durch folgende Beziehung bestimmen läßt:

$$C \cdot A_0 = A_T + A_D$$

wobei gilt:

$A_0$:   = Energie des Lichtes vor dem doppelbrechenden Element
$A_D$:   = Energie des durchgehenden Strahlungsanteils
$A_T$:   = Energie des totalreflektierten Strahlungsanteils
C:   = Konstanter Faktor

Obige Beziehung gilt auch für den Foster-Strahlteiler, da die Summe der Intensitäten der beiden Teilstrahlen immer unabhängig von der Polarisationsrichtung der auftreffenden Strahlung ist. Gemäß obiger Beziehung wird mittels einer Additionsschaltung, welche den Kurzzeitspeichern nachgeschaltet ist, zunächst die Summe von $A_T$ und $A_D$ ermittelt. Der Ausgangswert der Additionsschaltung ist demgemäß direkt proportional zu der Energie des Lichtes vor dem doppelbrechenden Element.

Mit Hilfe einer Divisionsschaltung, welche eingangsseitig mit dem Ausgang der Additionsschaltung und dem Ausgang eines der beiden Kurzzeitspeicher verbunden ist, wird anschließend das Verhältnis der Intensität des dem betreffenden Kurzzeitspeicher zugeordneten Teilstrahls, d.h. dem Wert A, zum Ausgangswert der Additionsschaltung, d.h. dem Wert $A_0$ · C, ermittelt, der so ermittelte normierte Wert wird dann der digitalen Datenverarbeitungseinrichtung zur weiteren Verarbeitung in Echtzeit zugeführt.

In einer bevorzugten Ausgestaltung der erfindungsgemäßen Meßanordnung ist jedem Kurzzeitspeicher ein in seiner Verstärkung programmierbarer Verstärker vorgeschaltet. Hierzu werden vorzugsweise sog. Instrumentenverstärker eingesetzt, bei welchen der verstärkungsbestimmende Widerstand mittels eines Widerstands- und Schalternetzwerkes verändert werden kann. Die Schalternetzwerke werden dabei von einer zweiten Steuerschaltung angesteuert. Unterschiedliche Probenabsorptionen können somit in gewissen, durch die Werte der Widerstände im Widerstandsnetzwerk festgelegte, Stufen ausgeglichen werden.

Der erzielte Vorteil liegt darin, daß nur die analogen Komponenten vor dem Instrumentenverstärker, d.h. die photoempfindlichen Fühler und deren Eingangs-Operationsverstärker, der gewünschten Auflösung und Genauigkeit multipliziert mit dem geforderten Dynamikbereich, welcher durch unterschiedliche Probenabsorptionen gegeben ist, genügen müssen. Demgegenüber müssen sämtliche analogen Komponenten nach dem Instrumentenverstärker nur der gewünschten Meßgenauigkeit genügen. Ist z. B. eine Auflösung und Genauigkeit des Meßergebnisses von 0,01 Winkelgraden erforderlich und sollen Substanzen untersucht werden können, welche eine Absorption bis zur log. Dichte 2 haben, so dürfen die analogen Komponenten nach dem Instrumentenverstärker eine maximale Nichtlinearität von 15 ppm, die vor dem Instrumentenverstärker von 0,15 ppm haben. Diese Tatsache ist von erheblicher Bedeutung, da es praktisch keine Sample/Hold-Schaltungen gibt (hier als Kurzzeitspeicher), welche eine Genauigkeit von 0,15 ppm haben. Ohne die erfindungsgemäße Meßanordnung mit den programmierbaren Instrumentenverstärker, müßte demzufolge zumindest bei höheren Probenabsorptionen eine erhebliche Verschlechterung der Meßgenauigkeit hingenommen werden. An dieser Stelle sei jedoch betont, daß die in der Verstärkung programmierbaren Instumentenverstärker nur deshalb notwendig sind, um die ihnen nachfolgenden analogen Bausteine möglichst optimal auszusteuern, mit dem Ziel, deren Linearitätseigenschaften bei höheren Probenabsorptionen zu erhalten. Wegen der Divisionsschaltung ist jedoch das Meßergebnis grundsätzlich unbeeinflußt von Veränderungen der Ausgangsintensität der Lichtquelle und unterschiedlichen Probenabsorptionen.

Aufgrund der nicht vermeidbaren Widerstandstoleranzen im Widerstandsnetzwerk der programmierbaren Instrumentenverstärker ergeben sich Ungleichheiten der Verstärkungsgrade bei den Insturmentenverstärkern untereinander.

Um diese Ungleichheiten bestimmen zu können, sind erfindungsgemäß vor jedem Instrumentenverstärker Schaltelemente vorgesehen, mit welchen eine Kalibrierspannung an die Eingänge der Insturmentenverstärker geleitet werden kann. Diese Schaltelemente werden mittels einer ihnen zugeordneten dritten Steuerschaltung kontrolliert.

Der Kalibriervorgang funktioniert im wesentlichen wie folgt: Zuerst wird die Verstärkung der Instrumentenverstärker mittels der zweiten Steuerschaltung auf den Wert 1 programmiert. Darauffolgend leiten die Schaltelemente an die Eingänge der Instrumentenverstärker eine Kalibrierspannung mit dem Wert zu, bei welchem die nachfolgenden Komponenten in ihrem Dynamikbereich voll ausgesteuert werden. Das am Analog/Digital-Wandler anliegende Signal wird daraufhin digitalisiert und die so erhaltene Information in einem Speicher abgelegt.

In den folgenden Schritten wird die Verstärkung jeweils auf den nächst höheren Wert eingestellt und der vorstehend beschriebene Vorgang solange wiederholt, bis sämtliche Verstärkungsstufen erfaßt sind.

Die so erhaltenen, zu jeder Verstärkungsstufe korrelierenden, abgespeicherten Werte werden dann als Korrekturfaktoren mit den jeweiligen Meßwerten, entsprechend der gerade eingestellten Verstärkungsstufe, verrechnet.

Ferner kann der Offset dadurch ermittelt werden, indem als Kalibrierspannung der Wert 0 Volt angelegt wird.

Der oben beschriebene Kalibriervorgang kann auch während dem laufenden Meßvorgang erfolgen. Demgemäß werden sämtliche Drifts erfaßt und dementsprechend die Korrekturfaktoren aktualisiert.

In einer besonders bevorzugten Ausgestaltung der erfindungsgemäßen Meßanordnung werden die notwendigen Kalibrierspannungen mittels eines Digital/Analog-Wandlers erzeugt. Damit ist außerdem der Vorteil verbunden, eine Vielzahl von unterschiedlichen Spannungswerten an den Eingang der Instrumentenverstärker anlegen zu können, womit auch die Linearitätsverhalten der analogen Komponenten ermittelt werden können. So kann beispielsweise ein, nach dem Einschalten des Meßsystems folgender, Systemtest versteckte Fehler innerhalb der analogen Schaltung feststellen.

In einer weiteren bevorzugten Ausgestaltung der erfindungsgemäßen Meßanordnung wird zur Erzeugung der Kalibrierspannung, eine der an den Ausgängen der photoempfindlichen Fühlern anliegenden Spannungen verwendet.

Hierbei erfolgt jeweils nur dann ein Kalibrierungszyklus, wenn, bedingt durch eine Änderung der Absorption der Probe, die Instrumentenverstärker in eine andere Verstärkungsstufe umgeschaltet werden müssen, d.h. eben erst dann die entsprechende Kalibrierspannung zur Verfügung steht. Um auch hier den Offset der den Instrumentenverstärkern folgenden Komponenten erfassen zu können, sind ferner die Schaltelemente derart ausgelegt, daß die Eingänge der Instrumentenverstärker auch mit dem analogen massepotential verbunden werden können.

Der Dynamikbereich des Meßsystems, d.h. die maximal zulässige optische Dichte der Probe, für welche die Genauigkeit des Meßergebnisses noch innerhalb der durch die elektronischen Komponenten vorgegebenen Toleranz liegt, wird erfindungsgemäß wie bereits beschrieben, durch den Einsatz von Instrumentenverstärkern wesentlich erweitert. Gemäß Anspruch 7 ist zur Steuerung der optischen Ausgangsleistung der Strahlungsquelle eine Versorgungseinheit vorgesehen, welche eingangsseitig mit der digitalen Datenverarbeitungseinrichtung und ausgangsseitig mit der Strahlungsquelle verbunden ist. Dadurch wird eine zusätzliche Erweiterung des Dynamikbereiches erzielt, die auch extremen Anforderungen, z. B. bei der Analyse von dunklen Zuckersäften in der Zuckerindustrie, gerecht wird.

Bei der Untersuchung von optisch aktiven Substanzen kann z. B. eine Impuls-Strahlungsquelle zur Erzeugung des Meßstrahls herangezogen werden. Diese hat den Vorteil, kurzzeitig sehr hohe Ausgangsleistungen zu liefern. Um in Verbindung mit der erfindungsgemäßen Meßvorrichtung eine bestmögliche Ausnützung der Arbeitsweise der Impuls-Strahlungsquelle zu gewährleisten, ist der Synchronisations- bzw. Triggereingang der Versorgungseinheit mit dem Ausgang der den Kurzzeitspeichern zugeordneten Steuerschaltung verbunden. Diese Maßnahme ermöglicht eine gleichzeitige, synchrone Arbeitsweise der Impuls-Strahlungsquelle und der Meßschaltung, wobei Meßzeiten im Sub-Mikrosekunden-Bereich erreichbar sind.

Eine weitere erfindungsgemäße Ausgestaltung erlaubt es, photometrische Analysen durchzuführen. Hierzu ist es notwendig, die Absolutintensität des zu analysierenden Lichtstrahls, insbesondere unabhängig von dessen Polarisationszustand, zu erfassen. Wie bereits beschrieben, ist der Ausgangswert der Additionsschaltung des Meßzweiges ein direktes Maß für die Intensität des Meßstrahls. Zur Auswertung dieses Signals ist erfindungsgemäß eine Einrichtung zur wahlweisen direkten Verbindung des Ausgangs dieser Additionsschaltung mit dem Meßeingang des Analog/Digital-Wandlers und Ausblendung der übrigen Signale vom Meßeingang des Analog/Digital-Wandlers vorgesehen.

Figur 1 zeigt eine Ausgestaltung der erfindungsgemäßen Meßanordnung für den optischen Teil, und wird im folgenden näher beschrieben.

Die mit der Versorgungseinheit 1 verbundene Strahlungsquelle 2, z. B. eine Xenon-Blitzlampe oder eine Impul-IR-Diode, erzeugt einen Hauptstrahl H. Dieser trifft auf einen 45 Grad-Foster-Strahlteiler (strahlteilender Polarisator) 3, welcher die ordentliche Strahlungskomponente (totalreflektierter Anteil) R von der außerordentlichen Strahlungskomponente (gerade durchgehender Anteil) M trennt.

Der Referenzstrahl R wird anschließend, beispielsweise von einem Glan-Polarisator 4 nachpolarisiert bevor er einen entsprechend zur Achse geschnittenen Quarzkristall 5, welcher das optisch aktive Referenzelement darstellt, durchläuft. In einem zweiten 45 Grad-Foster-Strahlteiler (erster strahlteilender Analysator) 6 wird der Referenzstrahl R dann in einen sog. Additivstrahl (totalreflektierter Anteil) a und einen sog. Prüfstrahl (gerade durchgehender Anteil) b aufgeteilt. Beide Strahlungskomponenten a, b werden darauf folgend von je einem photoempfindlichen Fühler 7, 8 quantitativ erfaßt.

Der vom strahlteilenden Polarisator 3 erzeugte Meßstrahl M durchläuft die Probenkammer 9 und trifft ebenfalls auf einen dritten 45 Grad-Foster-Strahlteiler (zweiter strahlteilender Analysator) 10. Dieser wiederum spaltet den Meßstrahl M in den Additivstrahl c und den Prüfstrahl d. Jedem dieser Strahlungskomponenten c, d ist (auch hier je ein großflächiger photoempfindlicher Fühler 11, 12 zugeordnet.

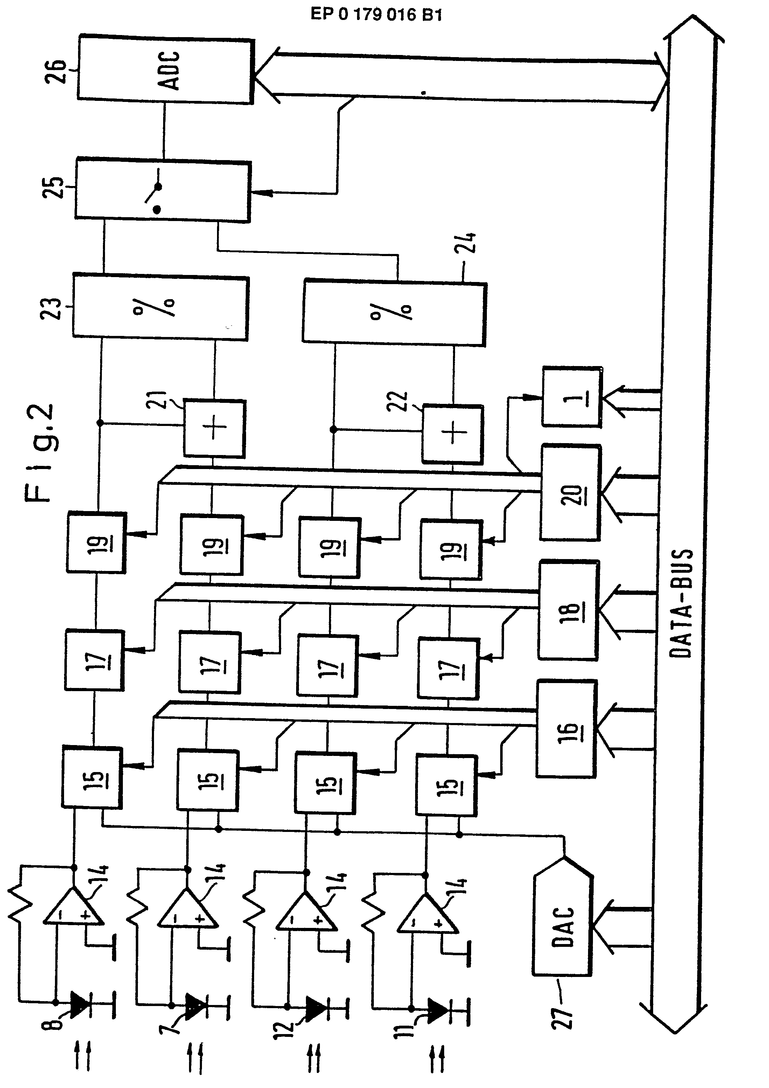

In Figur 2 ist ein Ausführungsbeispiel der Meßschaltung dargestellt.

Sämtliche photoempfindlichen Fühler 7, 8, 11, 12 sind mit Eingangs-Operationsverärker 14, welche vorzugsweise in der FET-Technologie hergestellt sind, beschaltet. An deren Ausgängen liegen Spannungswerte an, welche direkt proportional zu den Intensitäten der auf den, den jeweiligen Eingangs-Operationsverstärker 14 zugeordneten, photoempfindlichen Fühler 7, 8, 11, 12 auftreffenden Strahlung ist. Jeder Ausgang der o.g. Eingangs-Operationsverstärker 14 geht über ein Schaltelement 15 an den Eingang eines in der Verstärkung programmierbaren Instrumentenverstärkers 17. Die Schaltelemente jeden Kanales sind mit den Ausgängen der dritten Steuerschaltung 16 verbunden, und werden so über die digitale Datenverarbeitungsanlage programmiert. Die Instrumentenverstärker 17 selbst werden in ihrer Verstärkung mittels der zweiten Steuerschaltung 18 kontrolliert. Die Ausgänge der Instrumentenverstärker 17 sind mit den Eingängen ihnen zugeordneter Sample/Hold-Schaltungen 19, welche hier die Funktion der Kurzzeitspeicher übernehmen, verbunden. Deren synchrone Ansteuerung übernimmt die erste Steuerschaltung 20.

Die den Photoempfindlichen Fühler 7 und 8 zugeordneten Sample/Hold-Schaltungen 19 sind ausgangsseitig mit den Eingängen einer ersten Additionsschaltung 21 verbunden. Das Ausgangssignal der ersten Additionsschaltung 21 wird ferner an eine erste Divisionsschaltung 23 geführt. Deren zweiter Eingang ist mit dem Ausgang der den Photoempfindlichen Fühler 8 zugeordneten Sample/Hold-Schaltung 19 beschaltet. Demgemäß ist an dieser Leitung ein Spannungssignal vorhanden, welches direkt proportional zur Intensität des im ersten strahlteilenden Analysator 6 gerade durchgehenden Teilstrahl b ist. Mit anderen Worten: am zweiten Eingang der Divisionsschaltung 23 steht ein Signal zur Verfügung, welches dem Gesetz von Malus folgt, und daher zur Ermittlung des Wertes A herangezogen werden kann.

In analoger Weise dazu werden die Ausgangssignale der den photoempfindlichen Fühler 11, 12 zugeordneten Sample/Hold-Schaltungen 19 über eine zweite Additionsschaltung 22 an eine zweite Divisionsschaltung 24 geleitet.

Die Ausgänge der beiden Divisionsschaltungen 23, 24 führen an die Eingänge eines CMOS-Schalters 25, dessen Ausgang wiederum an den Meßeingang eines Analog/Digital-Wandlers 26 angeschlossen ist. Ferner ist der Steuereingang des CMOS-Schalters mit dem digitalen Systembus verbunden. Somit kann wahlweise die erste Divisionsschaltung 23 oder die zweite Divisionsschaltung 24 zum Analog/Digital-Wandler durchgeschaltet werden.

Mittels eines Digital/Analog-Wandlers 27 können zur Kalibrierung der gesamten Schaltung über die bereits beschriebenen Schaltelemente 15 an die Eingänge der Instrumentenverstärker 17 definierte Spannungen geleitet werden. Diese Kalibrierung erfolgt in gewissen Zeitabständen automatisch, um etwaige Drifts der Bauelemente erfassen und rechnerisch kompensieren zu können.

Um die Lichtquelle 2 mit den Kurzzeitspeichern 19 (Sample/Hold-Schaltungen) synchron ansteuern zu können ist der Triggereingang der Versorgungseinheit 1 der Lichtquelle 2 ebenfalls mit den Steuerausgängen der ersten Steuerschaltung 20 verbunden. Ferner ist zur Steuerung der Ausgangsleistung der Lichtquelle 2, deren Versorgungseinheit 1 auch direkt an die digitalen Datenverarbeitungseinrichtung angeschlossen.

**Patentansprüche:**

1. Vorrichtung zur Messung der Drehung der Schwingungsebene von linear polarisierter elektromagnetischer Strahlung (H) bzw. davon ableitbarer physikalischer Größen mit

a) einer Strahlungsquelle (2)
b) einem feststehenden strahlteilenden Analysator (10), der nach der zu untersuchenden Probe (9) angeordnet ist,
c) je einem photoempfindlichen Fühler (11, 12) für die aus dem strahlteilenden Analysator (10) austretenden Teilstrahlen (c, d) und mit
d) einer Meßschaltung, an die die Ausgänge der photoempfindlichen Fühler (11, 12) verbunden sind, *dadurch gekennzeichnet,*

e) daß vor der zu untersuchenden Probe (9) ein strahlteilender Polarisator (3) angeordnet ist, der die elektromagnetische Strahlung (H) in einen Meßstrahlengang (M) und einen Referenzstrahlengang (R) aufspaltet,

f) daß im Referenzstrahlengang (R) nach einem Referenzelement (5) ein weiterer strahlteilender Analysator (6) angeordnet ist,

g) daß die beiden strahlteilenden Analysatoren (6, 10) aus einem doppelbrechenden Material bestehen, wobei jeweils die beiden Teilstrahlen (a, b, c, d) an unterschiedlichen Stellen des Elements austreten,

h) daß die Meßschaltung auf die Verarbeitung der Ausgangssignale der photoempfindlichen Fühler (7, 8, 11, 12) beider strahlteilenden Analysatoren (6, 10) ausgelegt ist, wobei diese

   h.1) je einen jedem photoempfindlichen Fühler (7, 8, 11, 12) nachgeschalteten Kurzzeitspeicher (19) mit zugeordneter erster Steuerschaltung (20) zur synchronen, kurzzeitigen Speicherung der Ausgangssignale der photoempfindlichen Fühler (7, 8, 11, 12),

   h.2) je eine jedem Strahlengang zugeordnete Additionsschaltung (21, 22), die eingangsseitig mit den Ausgängen der, dem jeweiligen Strahlengang zugeordneten Kurzzeitspeichern (19) verbunden ist,

   h.3) je eine verzögerungsfrei arbeitende Divisionsschaltung (23, 24), die eingangsseitig jeweils mit dem Ausgang einer der beiden Additionsschaltungen (21, 22) und dem Ausgang einer der beiden jeweils zugeordneten Kurzzeitspeicher (19) verbunden ist,

   h.4) eine digitale Datenverarbeitungseinrichtung zur Berechnung und Ausgabe von des Polarisationszustandes der elektromagnetischen Strahlung zuordenbaren physikalischen Größen, wobei diese eingangsseitig mit dem Ausgang beider Divisionsschaltungen (23, 24) verbunden ist, und

   h.5) wenigstens einen der digitalen Datenverarbeitungsrichtung vorgeschalteten A/D-Wandler (26) aufweist.

2. Vorrichtung nach Anspruch 1, *dadurch gekennzeichnet*, daß die von der Strahlungsquelle (2) ausgehende elektromagnetische Strahlung (H) mittels eines strahlteilenden Polarisators (3) in den Referenzstrahl (R) und Meßstrahl (M) aufspaltbar ist.

3. Vorrichtung nach einem der vorstehenden Ansprüche 1 - 2, *dadurch gekennzeichnet*, daß jedem Kurzzeitspeicher (19) ein in seiner Verstärkung programmierbarer Verstärker (17) mit zugeordneter zweiter Steuerschaltung (18) vorgeschaltet ist.

4. Vorrichtung nach einem der vorstehenden Ansprüche 1 - 3, *dadurch gekennzeichnet*, daß zur Kalibrierung der analogen Komponenten, vor jedem programmierbaren Verstärker (17) je ein Schaltelement (15) mit zugeordneter dritten Steuerschaltung (16) vorgesehen ist, mit welchen wahlweise eine Kalibrierspannung durchschaltbar ist.

5. Vorrichtung nach einem der vorstehenden Ansprüche 1 - 4, *dadurch gekennzeichnet*, daß zur Erzeugung der Kalibrierspannung ein Digital/Analog-Wandler (27) vorgesehen ist.

6. Vorrichtung nach einem der vorstehenden Ansprüche 1 - 5, *dadurch gekennzeichnet*, daß zur Erzeugung der Kalibrierspannung eine der an den Ausgängen der photoempfindlichen Fühlern (7, 8, 11, 12) anliegenden Spannungen verwendet wird, und die Schaltelementen (15) auch zur Verbindung der Eingänge der Verstärker (17) mit dem analogen Massepotential ausgelegt sind.

7. Vorrichtung nach einem der vorstehenden Ansprüche 1 - 6, *dadurch gekennzeichnet*, daß zur Steuerung der optischen Ausgangsleistung der Strahlungsquelle (2) eine Versorgungseinheit (1) vorgesehen ist, welche eingangsseitig mit der digitalen Datenverarbeitungseinrichtung und ausgangsseitig mit der Strahlungsquelle (2) verbunden ist.

8. Vorrichtung nach einem der vorstehenden Ansprüche 1 - 7, *dadurch gekennzeichnet*, daß bei Verwendung einer gepulsten Strahlungsquelle (2), zu deren Synchronisation mit den Kurzzeitspeichern (19) auch der Triggereingang der Versorgungseinheit (1) mit dem Ausgang der den Kurzzeitspeichern (19) zugeordneten Steuerschaltung (20) verbunden ist.

9. Vorrichtung nach einem der vorstehenden Ansprüche 1 - 8, *dadurch gekennzeichnet*, daß zur Bestimmung von der zu analysierenden Probe (g) zuordenbaren photometrischen Größen eine Einrichtung (25) zur wahlweisen direkten Verbindung des Ausgangs der einen Additionsschaltung (22) mit dem Meßeingang des A/D-Wandlers (26) und Ausblendung der überigen Signale vom Meßeingang des A/D-Wandlers (26) vorgesehen ist.

**Claims**

1. A device for measuring the rotation of the plane of oscillation of linearly polarised electromagnetic radiation (H) and of physical parameters which can be derived therefrom comprising

a) a radiation source (2),
b) a stationary, beam-splitting analyser (10) which is arranged after the specimen (9) which is to be investigated,
c) a respective photo-sensitive sensor (11, 12) for the subsidiary beams (c, d) emerging from the beam-splitting analyser (10) and comprising
d) a measuring circuit to which the outputs of the photo-sensitive sensors (11, 12) are connected, characterised in that

e) in front of the specimen (9) which is to be investigated is arranged a beam-splitting polariser (3) which splits the electromagnetic radiation (H) into a measuring beam path (M) and a reference beam path (R),

f) that a further beam-splitting analyser (6) is arranged in the reference beam path (R) after a reference element (5),

g) that the two beam-splitting analysers (6, 10) consist of a birefringent material, the two subsidiary beams (a, b, c, d) emerging from different points of the element,

h) that the measuring circuit is designed to process the output signals of the photo-sensitive sensors (7, 8, 11, 12) of the two beam-splitting analysers (6, 10) and comprises

h.1) a respective short-term store (19) which is connected to the output of each photo-sensitive sensor (7, 8, 11, 12) and which is assigned a first control circuit (20) fox the synchronous, short-term storage of the output signals of the photo-sensitive sensors (7, 8, 11, 12),

h.2) a respective addition circuit (21, 22) which is assigned to each beam path and which is connected at its input to the outputs of the short-term stores (19) assigned to the respective beam path,

h.3) a respective division circuit (23, 24) which operates without delay and which is connected at its input to the output of one of the two addition circuits (21, 22) and to the output of one of the two respective assigned short-term stores (19),

h.4) a digital data processing device which calculates and outputs physical parameters which can be assigned to the polaristion state of the electromagnetic radiation, and which is connected at its input to the output of the two division circuits (23, 24) and

h.5) at least one A/D-converter (26) which precedes the digital data processing device.

2. A device as claimed in Claim 1, characterised in that the electromagnetic radiation (H) emitted from the radiation source (2) can be split by a beam-splitting polariser (3) into the reference beam (R) and the measuring beam (M).

3. A device as claimed in one of the preceding Claims 1 - 2, characterized in that each short-term store (19) is preceded by an amplifier (17) which can be programmed in respect of its amplification and which is assigned a second control circuit (18).

4. A device as claimed in one of the preceding Claims 1 - 3, characterized in that for the calibration of the analogue components, each programmable amplifier (17) is preceded by a switching element (15) with an assigned third control circuit (16) by means of which a calibration voltage can be selectively switched through.

5. A device as claimed in one of the preceding Claims 1 - 4, characterised in that a digital/analogue converter (27) is provided for the generation of the calibration voltage.

6. A device as claimed in one of the preceding Claims 1 - 5, characterised in that one of the voltages connected to the outputs of the photo-sensitive sensors (7, 8, 11, 12) is used to generate the calibration voltage and the switching elements (15) are also designed to connect the inputs of the amplifiers (17) to the analogue earth potential.

7. A device as claimed in one of the preceding Claims 1 - 6, characterised in that for the control of the optical output power of the radiation source (2) a supply unit (1) is provided which is connected at its input to the digital data processing device and is connected at its output to the radiation source (2).

8. A device as claimed in one of the preceding Claims 1 - 7, characterised in that when a pulsed radiation source (2) is used, in order to synchronise the latter with the short-term stores (19) the trigger input of the supply unit (1) is also connected to the output of the control circuit (20) which is assigned to the short-term stores (19).

9. A device as claimed in one of the preceding Claims 1 - 8, characterized in that in order to define photometric parameters which can be assigned to the specimen (9) which is to be analysed, a device (23) is provided which selectively directly connects the output of the (7) addition circuit (22) to the measuring input of the A/D-converter (26) and which gates out the other signals from the measuring input of the A/D-converter (26).

**Revendications**

1. Dispositif pour mesurer la rotation du plan de polarisation d'un rayonnement électromagnétique linéairement polarisé (H) ou des grandeurs physiques dérivables de celui-ci, comportant:

a) une source de rayonnement (2),

b) un analyseur stationnaire (10) de séparation du faisceau, qui est disposé après l'échantillon à examiner (9),

c) un détecteur photosensible respectif (11, 12) pour les rayonnements partiels (c, d) issus de l'analyseur (10) de séparation du faisceau, et

d) un montage de mesure, auquel sont reliées les sorties des détecteurs photosensibles (11, 12),caractérisé en ce que :

e) devant l'échantillon à examiner (9), est disposé un polariseur (3) de séparation du faisceau, qui sépare le rayonnement électromagnétique (H) en un rayonnement de mesure (M) et un rayonnement de référence (R),

f) dans le rayonnement de référence (R), après un élément de référence (5), est disposé un autre analyseur (6) de séparation du faisceau,

g) les deux analyseurs (6, 10) de séparation du faisceau sont constitués d'un matériau biréfringent, les deux rayonnements partiels (a, b, c, d) sortant, a chaque fois, en des endroits différents de l'élément,

h) le montage de mesure est adapté pour traiter les signaux de sortie des détecteurs photosensibles (7, 8, 11, 12) des deux analyseurs (6, 10) de séparation du faisceau, celui-ci présentant:

h.1) à chaque fois, une mémoire tampon (19), disposée à la suite de chaque détecteur photosensible (7, 8, 11, 12), avec un premier circuit de commande associé (20) pour la mémorisation temporaire synchrone des signaux de sortie des détecteurs photosensibles (7, 8, 11, 12), h.2) à chaque fois, un circuit additionneur (21, 22) associé à chaque rayonnement, qui est relié, du côté d'entrée, aux sorties des mémoires tampons (19) associées au rayonnement respectif,

h.3) à chaque fois, un circuit diviseur (23, 24) travaillant sans délai, qui, du côté d'entrée, est relié, à chaque fois, à la sortie d'un des deux circuits additionneurs (21, 22) et à la sortie d'une des deux mémoires tampons (19) à chaque fois associées,

h.4) un dispositif numérique de traitement de données pour calculer et extraire des grandeurs physiques qui peuvent être associées à l'état de polarisation du rayonnement électromagnétique, celui-ci étant relié, du côté d'entrée, à la sortie des deux circuits diviseurs (23, 24), et

h.5) au moins un convertisseur analogique-numérique (26) placé en amont du dispositif numérique de traitement de données.

2. Dispositif selon la revendication 1, caractérisé en ce que le rayonnement électromagnétique (H) issu de la source de rayonnement (2) peut être séparé, au moyen d'un polariseur (3) de séparation du faisceau, en le rayonnement de référence (R) et le rayonnement de mesure (M).

3. Dispositif selon une des revendications précédentes 1 ou 2, caractérisé en ce qu'un amplificateur (17) à gain programmable avec un second circuit de commande associé (18) est placé en amont de chaque mémoire tampon (19).

4. Dispositif selon une des revendications précédentes 1 à 3, caractérisé en ce que, pour calibrer les composants analogiques, on prévoit, avant chaque amplificateur programmable (17), un élément de commutation (15) avec un troisième circuit de commande associé (16), auquel est reliée à volonté une tension de calibrage.

5. Dispositif selon une des revendications précédentes 1 à 4, caractérisé en ce que, pour créer la tension de calibrage, on prévoit un convertisseur numérique-analogique (27).

6. Dispositif selon une des revendications précédentes 1 à 5, caractérisé en ce que, pour créer la tension de calibrage, on utilise une des tensions se trouvant aux sorties des détecteurs photosensibles (7, 8, 11, 12), et les éléments de commutation (15) sont également adaptés pour relier les entrées des amplificateurs (17) au potentiel de masse analogique.

7. Dispositif selon une des revendications précédentes 1 à 6, caractérisé en ce que, pour commander la puissance de sortie optique de la source de rayonnement (2), on prévoit une unité d'alimentation (1), laquelle est reliée, du côté d'entrée, au dispositif numérique de traitement de données et, du côté de sortie, à la source de rayonnement (2).

8. Dispositif selon une des revendications précédentes 1 à 7, caractérisé en ce que, lorsqu'on utilise une source pulsée de rayonnement (2), pour sa synchronisation avec les mémoires tampons (19), l'entrée de déclenchement de l'unité d'alimentation (1) est également reliée à la sortie du circuit de commande (20) associé aux mémoires tampons (19).

9. Dispositif selon une des revendications précédentes 1 à 8, caractérisé en ce que, pour déterminer des grandeurs photométriques qui peuvent être associées à l'échantillon (9) à analyser, on prévoit un dispositif (25) pour la liaison directe à volonté de la sortie d'un circuit additionneur (22) à l'entrée de mesure du convertisseur analogique-numérique (26) et l'extraction des signaux restants de l'entrée de mesure du convertisseur analogique-numérique (26).

Fig.1

EP 0 179 016 B1

Fig.2